# EUROPÄISCHE PATENTSCHRIFT

(11) **EP 1 873 110 B1**
(45) Veröffentlichungstag und Bekanntmachung des Hinweises auf die Patenterteilung: **02.03.2011**
(21) Anmeldenummer: 06013090.3
(22) Anmeldetag: 26.06.2006
(51) Int. Cl.: B66B 7/04, B65G 39/06

(54) **Laufrolle für Führungs- und/oder Transportzwecke**
Traction- and/or guiding rollers
Rouleaux de traction et/ou de guidage

(43) Veröffentlichungstag der Anmeldung: 02.01.2008
(73) Patentinhaber: Carl Freudenberg KG, 69469 Weinheim (DE)
(72) Erfinder: Fietz, Roland, 35275 Neustadt (DE)

(56) Entgegenhaltungen:
- EP-A- 0 960 841
- EP-A2- 0 858 962
- FR-A- 2 554 100
- FR-A- 2 760 732
- US-A- 3 653 484
- US-A- 4 005 773
- US-A- 5 372 232

## Beschreibung

### Technisches Gebiet

In der Industrie- und Haustechnik gibt es eine Vielzahl von Anwendungen, bei denen Laufrollen für Führungs- und Transportzwecke verwendet werden, beispielsweise bei Aufzügen und Fahrtreppen. Ein beispiel ist in der US-A-4005773 gegeben. Diese Laufrollen bestehen aus einem Trägerteil, vielfach aus Metall oder Kunststoff, das mit einer Bandage aus einem Elastomermaterial umgeben ist. Die Bandage wird im Gießverfahren aufgebracht und das verwendete Material besteht aus einem Polyurethan mit einer Härte von oberhalb 90° Shore Härte. Die relativ hohe Härte ist erforderlich, um die gegebenen Belastungen aufzunehmen und auch um Abplattungen beim Stillstand der Anlage durch Härtepressung zu vermeiden. Eine zu weiche Bandage mit zu niedriger Festigkeit führt zu starker Deformation und auch zu einer Abplattung, was im Betrieb zu einer hohen Geräuschentwicklung führt, und auch eine Schädigung des zu bewegenden Produktes zur Folge haben kann. So wird bei Aufzügen der Fahrkomfort durch eine zu starke Geräuschentwicklung gemindert. Auch werden Schwingungen, in die von den Rollen berührten Bauteile, übertragen und können sich so störend auf ganze Gebäudekomplexe auswirken.

### Darstellung der Erfindung

Der Erfindung liegt die Aufgabe zugrunde, eine Laufrolle zu schaffen, mit der die Nachteile der bisher bekannten Konstruktionen vermieden werden, bei der die Entwicklung von Geräuschen und Schwingungen reduziert wird, die kostengünstig hergestellt werden kann und die darüber hinaus eine lange Lebenszeit hat. Sie soll insbesondere für schnelllaufende Aufzüge mit Rollenführungen eingesetzt werden.

Die Lösung der gestellten Aufgabe wird mit den Merkmalen des Anspruchs 1 erreicht. Die Unteransprüche 2 bis 14 stellen vorteilhafte Ausbildungen des Erfindungsgegenstands dar.

Gemäß der Erfindung wird die aus einem Trägerteil mit einer Bandage aus einem Elastomermaterial bestehende Laufrolle mit einer Bandage versehen, die aus mehreren Komponenten mit unterschiedlicher Härte besteht. Eine solche Bandage wird bevorzugt aus zwei koaxial zueinander angeordneten Komponenten hergestellt, wobei die äußere Komponente eine größere Härte als die innere Komponente hat. Die äußere Komponente besteht somit aus einem harten Material, welches relativ resistent gegen Abplattung durch Verpressung ist und somit eine schützende Außenschicht darstellt, während die innere Komponente aus einem weicheren Material gebildet ist, das ein sehr gutes Dämpfungsverhalten hat und für die Aufnahme von Schwingungen geeignet ist. Durch die Ausbildung der Bandage mit einem relativ harten Außenring und einem relativ flexiblen Innenring erhält die Laufrolle ein wesentlich elastisch höheres Verhalten, als das bei bisherigen Produkten der Fall ist. Eine hohe Belastbarkeit bleibt durch die äußere, harte Komponente weiterhin gegeben, während die weichere innere Komponente zu einer erheblichen Verbesserung der Laufeigenschaften und Schwingungsdämpfung beiträgt.

Die äußere Komponente wird aus einem elastischen polymeren Werkstoff mit einer Härte größer als 90° Sh hergestellt, wärend die innere Komponente aus einem elastischen polymeren Werkstoff mit einer Härte kleiner als 90° Sh gebildet wird. Dabei kann für beide Komponenten nach wie vor Polyurethan eingesetzt werden.

Für das Trägerteil kann sowohl Metall als auch Kunststoff oder auch eine Metall-Kunstoff-Kombination eingesetzt werden.

Bei der Herstellung wird die innere Komponente mit dem Trägerteil kraft- und/oder formschlüssig verbunden. Auf die gleiche Weise wird die äußere Komponente mit der inneren Komponente zusammengefügt. Hierfür wird das Spritzgießverfahren eingesetzt, welches in vorteilhafter Weise diese Vorgehensweise ermöglicht. Dabei wird der Schmelzpunkt der inneren Komponente so gewählt, dass er niedriger als der Schmelzpunkt der äußeren Komponente ist. Der Schmelzpunkt der inneren Komponente liegt dabei zwischen 160°C und 190°C, vorzugsweise zwischen 170°C und 180°C. Der Schmelzpunkt der äußeren Komponente wird zwischen 190°C und 240°C, vorzugsweise zwischen 220°C und 230°C gewählt. Die Dicken der Komponenten können unterschiedlich sein, bevorzugt wird jedoch eine Ausgestaltung, bei der die Dicken der Komponenten gleich sind.

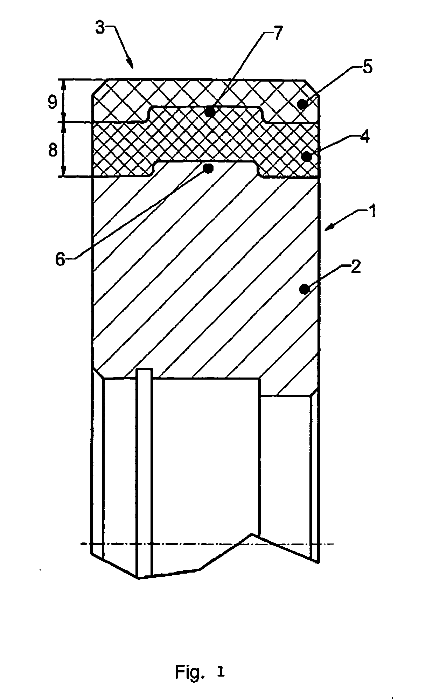

### Kurzbeschreibung der Zeichnung

Anhand eines in der Zeichnung dargestellten Ausführungsbeispiels wird die Erfindung nachstehend näher erläutert:

### Ausführung der Erfindung

In der beiliegenden Figur ist der obere Teil einer Laufrolle 1 im Schnitt dargestellt. Die Laufrolle 1 besteht aus dem Trägerteil 2 und der Bandage 3, die aus den Komponenten 4 und 5 mit unterschiedlicher Härte besteht. Die beiden Komponenten 4 und 5 sind koaxial zueinander angeordnet. Dabei hat die äußere Komponente 5 eine größere Härte als die innere Komponente 4. Die äußere Komponente 5 besteht aus einem elastischen polymeren Werkstoff mit der Härte größer 90°Sh und die innere Komponente aus einem Werkstoff mit einer Härte kleiner 90° Sh. Das Trägerteil 2 ist aus einem Kunststoff alternativ aus Metall oder einem Verbundwerkstoff hergestellt. Die Verbindung zwischen dem Trägerteil 2 und der inneren Komponente 4 erfolgt im Spritzgießverfahren durch Anschmelzen, alternativ durch Bindemittel. Zur Verstärkung des Verbunds zwischen dem Trägerteil 2 und der inneren Komponente 4 hat der Trägerteil 2 mittig die Auswölbung 6. Hierdurch wird die durch Vulkanisation gebildete kraftschlüssige Verbindung durch eine entstehende formschlüssige Verbindung noch unterstützt. Die Verdickung 6 des Trägerteils 2 wird gewissermaßen als Verdickung 7 an der inneren Komponente 4 fortgesetzt, so dass die Verbindung der äußeren Komponente 5 mit der inneren Komponente 4 in gleicher Weise wie die Verbindung zwischen dem Trägerteil 2 und der inneren Komponente 4 erfolgt. Im gewählten Beispiel beträgt der Schmelzpunkt der inneren Komponente 175°C, während der Schmelzpunkt der äußeren Komponente 5 225°C beträgt. Die Dicke 8 der inneren Komponente 4 wird im Beispiel größer gewählt als die Dicke 9 der äußeren Komponente 5. In diesem Fall wird eine besonders gute Dämpfung erreicht.

## Patentansprüche

1. Laufrolle für Führungs- und/oder Transportzwecke, insbesondere für Förder- und Hebewerke wie Auszüge und Fahrstühle, aus einem Trägerteil mit einer Bandage aus einem Elastomermaterial, wobei die Bandage (3) aus wenigstens zwei koaxial zueinander angeordneten Komponenten (4, 5) mit unterschiedlicher Härte besteht, **dadurch gekennzeichnet, dass** die äußere Komponente (5) eine größere Härte als die innere Komponente (4) hat.

2. Laufrolle für Führungs- und/oder Transportzwecke nach Anspruche 1, **dadurch gekennzeichnet, dass** die äußere Komponente (5) aus einem elastischen polymeren Werkstoff mit einer Härte größer als 90° Sh besteht.

3. Laufrolle für Führungs- und/oder Transportzwecke nach einem der Ansprüche 1 bis 2, **dadurch gekennzeichnet, dass** die innere Komponente (4) aus einem elastischen polymeren Werkstoff mit einer Härte kleiner als 90° Sh besteht.

4. Laufrolle für Führungs- und/oder Transportzwecke nach einem der Ansprüche 1 bis 3, **dadurch gekennzeichnet, dass** die Komponenten (4, 5) aus Polyurethan bestehen.

5. Laufrolle für Führungs- und/oder Transportzwecke nach einem der Ansprüche 1 bis 4, **dadurch gekennzeichnet, dass** der Trägerteil (2) aus Metall besteht

6. Laufrolle für Führungs- und/oder Transportzwecke nach einem der Ansprüche 1 bis 4, **dadurch gekennzeichnet, dass** der Trägerteil (2) aus einem Kunststoff besteht

7. Laufrolle für Führungs- und/oder Transportzwecke nach einem der Ansprüche 1 bis 4, **dadurch gekennzeichnet, dass** der Trägerteil (2) aus einem Kunststoff-Verbund oder aus Metall und Kunststoff besteht.

8. Laufrolle für Führungs- und/oder Transportzwecke nach einem der Ansprüche 1 bis 7, **dadurch gekennzeichnet, dass** die innere Komponente (4) mit dem Trägerteil (2) kraft- und/oder formschlüssig verbunden ist.

9. Laufrolle für Führungs- und/oder Transportzwecke nach einem der Ansprüche 1 bis 8, **dadurch gekennzeichnet, dass** die äußere Komponente (5) mit der inneren Komponente (4) kraft- und/oder formschlüssig verbunden ist

10. Laufrolle für Führungs- und/oder Transportzwecke nach einem der Ansprüche 1 bis 9, **dadurch gekennzeichnet, dass** die Komponenten (4,5) im Spritzgießverfahren aufgebracht sind.

11. Laufrolle für Führungs- und/oder Transportzwecke nach einem der Ansprüche 1 bis 10, **dadurch gekennzeichnet, dass** der Schmelzpunkt der inneren Komponente (4) niedriger als der Schmelzpunkt der äußeren Komponente (5) ist.

12. Laufrolle für Führungs- und/oder Transportzwecke nach Anspruch 11, **dadurch gekennzeichnet, dass** der Schmelzpunkt der inneren Komponente (4) zwischen 160°C und 190°C, vorzugsweise zwischen 170°C und 180°C liegt.

13. Laufrolle für Führungs- und/oder Transportzwecke nach einem der Ansprüche 11 oder 12, **dadurch gekennzeichnet, dass** der Schmelzpunkt der äußeren Komponente (5) zwischen 190°C und 240°C. vorzugsweise zwischen 220°C und 230°C liegt.

14. Laufrolle für Führungs- und/oder Transportzwecke nach einem der Ansprüche 1 bis 13, **dadurch gekennzeichnet, dass** die Dicken (8, 9) der Komponenten (4, 5) gleich sind.

## Claims

1. Running roller for guiding and/or transporting purposes, in particular for conveying and lifting mechanisms such as lifts, made up of a carrier part with a facing strip made of an elastomer material, wherein the facing strip (3) comprises at least two coaxially arranged components (4, 5) with different degrees of hardness, **characterized in that** the outer component (5) has a greater degree of hardness than the inner component (4).

2. Running roller for guiding and/or transporting purposes according to Claim 1, **characterized in that** the outer component (5) consists of an elastic polymer material with a hardness greater than 90° Shore.

3. Running roller for guiding and/or transporting purposes according to either of Claims 1 and 2, **characterized in that** the inner component (4) consists of an elastic polymer material with a hardness less than 90° Shore.

4. Running roller for guiding and/or transporting purposes according to one of Claims 1 to 3, **characterized in that** the components (4, 5) consist of polyurethane.

5. Running roller for guiding and/or transporting purposes according to one of Claims 1 to 4, **characterized in that** the carrier part (2) consists of metal.

6. Running roller for guiding and/or transporting purposes according to one of Claims 1 to 4, **characterized in that** the carrier part (2) consists of a plastics material.

7. Running roller for guiding and/or transporting purposes according to one of Claims 1 to 4, **characterized in that** the carrier part (2) consists of a plastics composite or of metal and plastics material.

8. Running roller for guiding and/or transporting purposes according to one of Claims 1 to 7, **characterized in that** the inner component (4) is connected to the carrier part (2) in a force-fitting and/or form-fitting manner.

9. Running roller for guiding and/or transporting purposes according to one of Claims 1 to 8, **characterized in that** the outer component (5) is connected to the inner component (4) in a force-fitting and/or form-fitting manner.

10. Running roller for guiding and/or transporting purposes according to one of Claims 1 to 9, **characterized in that** the components (4, 5) are applied by injection moulding.

11. Running roller for guiding and/or transporting purposes according to one of Claims 1 to 10, **characterized in that** the melting point of the inner component (4) is lower than the melting point of the outer component (5).

12. Running roller for guiding and/or transporting purposes according to Claim 11, **characterized in that** the melting point of the inner component (4) is between 160°C and 190°C, preferably between 170°C and 180°C.

13. Running roller for guiding and/or transporting purposes according to either of Claims 11 and 12, **characterized in that** the melting point of the outer component (5) is between 190°C and 240°C, preferably between 220°C and 230°C.

14. Running roller for guiding and/or transporting purposes according to one of Claims 1 to 13, **characterized in that** the thicknesses (8, 9) of the components (4, 5) are equal.

## Revendications

1. Rouleaux de guidage et/ou de transport, notamment pour des mécanismes de transport et de levage comme des ascenseurs et des élévateurs, constitués d'une partie de support avec un bandage en matériau élastomère, le bandage (3) se composant d'au moins deux composants (4, 5) disposés coaxialement l'un par rapport à l'autre ayant des duretés différentes, **caractérisés en ce que** le composant extérieur (5) a une plus grande dureté que le composant intérieur (4).

2. Rouleaux de guidage et/ou de transport selon la revendication 1, **caractérisés en ce que** le composant extérieur (5) se compose d'un matériau polymère élastique ayant une dureté supérieure à 90° Sh.

3. Rouleaux de guidage et/ou de transport selon l'une quelconque des revendications 1 à 2, **caractérisés en ce que** le composant intérieur (4) se compose d'un matériau polymère élastique ayant une dureté inférieure à 90° Sh.

4. Rouleaux de guidage et/ou de transport selon l'une quelconque des revendications 1 à 3, **caractérisés en ce que** les composants (4, 5) se composent de polyuréthane.

5. Rouleaux de guidage et/ou de transport selon l'une quelconque des revendications 1 à 4, **caractérisés en ce que** la partie de support (2) se compose de métal.

6. Rouleaux de guidage et/ou de transport selon l'une quelconque des revendications 1 à 4, **caractérisés en ce que** la partie de support (2) se compose de plastique.

7. Rouleaux de guidage et/ou de transport selon l'une quelconque des revendications 1 à 4, **caractérisés en ce que** la partie de support (2) se compose d'un composite de plastique, ou de métal et de plastique.

8. Rouleaux de guidage et/ou de transport selon l'une quelconque des revendications 1 à 7, **caractérisés en ce que** le composant intérieur (4) est connecté à la partie de support (2) par engagement par force et/ou par correspondance géométrique.

9. Rouleaux de guidage et/ou de transport selon l'une quelconque des revendications 1 à 8, **caractérisés en ce que** le composant extérieur (5) est connecté au composant intérieur (4) par engagement par force et/ou par correspondance géométrique.

10. Rouleaux de guidage et/ou de transport selon l'une quelconque des revendications 1 à 9, **caractérisés en ce que** les composants (4, 5) sont appliqués par un procédé de moulage par injection.

11. Rouleaux de guidage et/ou de transport selon l'une quelconque des revendications 1 à 10, **caractérisés en ce que** le point de fusion du composant intérieur (4) est inférieur au point de fusion du composant extérieur (5).

12. Rouleaux de guidage et/ou de transport selon la revendication 11, **caractérisés en ce que** le point de fusion du composant intérieur (4) est compris entre 160°C et 190°C, de préférence entre 170°C et 180°C.

13. Rouleaux de guidage et/ou de transport selon l'une quelconque des revendications 11 ou 12, **caractérisés en ce que** le point de fusion du composant extérieur (5) est compris entre 190°C et 240°C, de préférence entre 220°C et 230°C.

14. Rouleaux de guidage et/ou de transport selon l'une quelconque des revendications 1 à 13, **caractérisés en ce que** les épaisseurs (8, 9) des composants (4, 5) sont identiques.
